# EUROPEAN PATENT SPECIFICATION

(11) **EP 2 792 466 B1**
(45) Date of publication and mention of the grant of the patent: **19.10.2016**
(21) Application number: 12858010.7
(22) Date of filing: 10.12.2012
(51) Int. Cl.: B29C 49/06, B29B 11/14, B65D 1/32, B29C 49/12

(54) **PARISON AND CONTAINER BLOW-MOLDING METHOD USING SAME**
ROHLING UND VERFAHREN ZUR BLASFORMUNG EINES BEHÄLTERS DARAUS
PARAISON ET PROCÉDÉ DE MOULAGE PAR SOUFFLAGE DE RÉCIPIENT UTILISANT CELLE-CI

(30) Priority: 13.12.2011 JP 2011272805
(43) Date of publication of application: 22.10.2014
(73) Proprietor: Yoshida Industries Co., Ltd., Sumida-ku, Tokyo 131-0043 (JP)
(72) Inventor: OGATA, Satoshi, Tokyo 131-0043 (JP); TESHIMA, Kenzo, Tokyo 131-0043 (JP)
(74) Representative: Santarelli
(86) International application number: PCT/JP2012/081912
(87) International publication number: WO 2013/089054

(56) References cited:
- EP-A2- 0 842 857
- JP-A- S 635 924
- JP-A- H02 248 232
- JP-A- H05 330 535
- JP-A- H07 156 933
- JP-A- 2010 274 950
- JP-B2- 3 924 082
- US-A- 4 323 411
- US-A- 4 564 495
- US-A- 4 724 116

## Description

### [Technical Field]

The present invention relates to a parison for molding a plastic container and a blow-molding method using the parison. The container has a body section, which can contain contents therein and is a squeezable by pressure to be applied thereto by fingers, and a bottom section having a wall thickness greater than that of the body section.

### [Background Art]

There are two methods for blow molding a container in which one method (Patent Document 1) includes steps of forming a parison by extruding a synthetic resin (plastic) into a tubular form, setting the parison into a mold in which one end of the passion has been closed and blowing an air under pressure into the parison from the other end thereof so as to stretch the parison along the inner surface of the mold. Another method (Patent Document 2) includes steps of forming a parison by injecting a synthetic resin into a mold by which one end is closed by injection molding, removing the parison from the mold and putting it into blow molding mold and forming the parison into a container along the blow molding mold.

In the blow molding method according to Patent Document 1, a wall thickness of the container to be molded is limited to a certain extent, whereas, in the blow molding method according to Patent Document 2, it is possible to mold a container having wall thicknesses greatly differing at various parts thereof.

### [Citation List]

### [Patent Literature]

[PTL 1] Japanese Patent Application Laid-open Publication No. Hei5-301274
[PTL 2] Japanese Patent No. 3924082

### [Summary of Invention]

### [Technical Problem]

Comparing with a glass container, a blow molded plastic container is lightweight and has a squeezable property of being deformed easily by fingers to squeeze contents contained therein. However, it lacks a sense of luxury and stability in an empty state, and becomes unstable when being charged with contents. If the lower side of the container is formed slimmer than the upper side thereof considering design of the container for use as a cosmetic container, for example, the stability of the container is further degraded.

Thus, it is desirable to improve the stability of the container by increasing the thickness of the bottom section of the container. However, in the blow-molding method described in Patent Document 1, although it is possible to partially vary wall thicknesses of portions or sections such as side wall sections of a cylindrical container, it is difficult to carry out the blow molding so that the bottom section of the container has a wall thickness greater than that of the body section.

On the other hand, in order to mold a container by the blow molding method described in Patent Document 2 , the parison, which has been molded by injection in hollow shape with the bottom, is removed from the molds, reheated and then inserted into the blow-molding mold to carry out the blow molding. However, since the body portion and the bottom portion of the parison are stretched in axial land radial directions when the blow molding is carried out, it is difficult to mold the parison while maintaining a desired wall thickness of the bottom section thereof.

US 4323411 discloses a method according to which a hot parison is blown in a mold into a preform having a shape slightly smaller than the finished article. The preform is then removed from its mold and a prefabricated part is attached to the preform. The preform is then blow molded to impart the finished shape to the article and to embed the prefabricated part into the article.

The present invention has been made in view of the aforementioned conventional problems, and an object thereof is to provide a parison for molding a container, the body portion of which is squeezable with thin wall thickness and the bottom portion of which has a desired thickness greater than that of the body portion, and also to provide a method for blow molding the container using the above parison.

### [Solution to Problem]

In order to achieve the aforementioned objects, a parison according to the present invention comprises a neck forming portion, a shoulder forming portion, a body forming portion and a bottom forming portion, characterized in that the bottom forming portion has a sidewall and a bottom wall with the wall thicknesses of both of the sidewall and bottom wall being greater than a wall thickness of a body section of the container to be molded, and that an external shape of the bottom forming portion of the parison is same as an external shape of a bottom section of the container to be molded.

With the use of the parison set forth above, when a compressed air under pressure is blown into the parison in blow molding mold, the body forming portion is stretched but the bottom forming portion is not stretched, thereby making it possible to form a container having the bottom section of desired wall thickness.

Further, in the case where a hollow portion in which a compressed air is blown is formed along a central axis of the body forming portion of the parison in a narrow cylindrical concave shape with a bottom surface of the concave terminating at a position within 3.5 mm above a boundary between the body forming portion and the bottom forming portion of the parison, the body forming portion is moved only in the axial direction immediately after compressed air for blow molding is blown therein and not stretched in the radial direction, whereby the shape of the bottom section of the formed container is in a shape that matches the bottom forming portion of the parison.

Further, in the case where a lower portion of the body forming portion of the parison has a curved surface whose width and thickness gradually increase toward the bottom forming portion and the curved surface has a gradient such that an amount of change in a axial direction is greater than an amount of change in a width direction, it becomes possible to provide a formed container in which the boundary between the body section and the bottom section are smoothly connected.

A blow molding method according to the present invention comprises steps of forming a parison comprising a neck forming portion, a shoulder forming portion, a body forming portion and a bottom forming portion, wherein the bottom forming portion has a sidewall and a bottom wall and wall thicknesses of both of the sidewall and bottom wall are greater than a wall thickness of a body section of the container to be molded; preparing blow molding mold which has such internal shape that is greater than external shapes of the shoulder forming portion and the body forming portion and is substantially same as an external shape of the bottom forming portion; inserting the parison into the mold with the neck forming portion being held with such spaces that an outer sidewall and an outer bottom surface of the bottom forming portion of the parison are separated with a minute distance from a bottom inner periphery and a bottom inner surface of the mold, respectively; and blowing compressed air into the parison, thereby stretching the body forming portion of the parison in an axial direction and moving the bottom forming portion of the parison toward the bottom inner surface of the mold, causing the outer bottom surface of the bottom forming portion to abut on the inner bottom surface of the mold and causing an outer periphery of the bottom forming portion to abut on the bottom inner periphery of the mold, and restricting the movement of the bottom portion by such abutments, and thereafter, stretching the body forming portion in a lateral direction, and bringing the shoulder forming portion and the body forming portion into contact with inner surface of the mold, whereby the external shape of the bottom forming portion of the parison becomes same as an external shape of a bottom section of the container.

Further, in the case where the parison to be used in the blow molding is formed such that the bottom surface of the hollow concave portion thereof terminates at a position within 3.5 mm above the boundary between the body forming portion and the bottom forming portion, since the stretching of the bottom forming portion of the passion is prevented at the time of blow molding, it will be more ensured that the shape of the bottom section of the formed container match that of the bottom forming portion of the parison.

Further, in the case where the parison is formed such that a lower portion of the body forming portion thereof has a curved surface whose width and wall thickness gradually increase toward the bottom forming portion and the curved surface has a gradient such that an amount of change in an axial direction is greater than an amount of change in a width direction, it becomes possible to provide a molded container in which the boundary portion between the body forming section and the bottom forming section is smoothly connected.

### [Advantageous Effects of Invention]

According to the present invention, it becomes possible to manufacture a plastic container that has a squeezable property to be deformed by pressure applied on the body section of the container by fingers, and that includes a bottom section having a desired wall thickness greater than a wall thickness of the body portion.

### [Brief Description of Drawings]

Fig. 1 is a diagram illustrating a container for cosmetic material blow molded using a parison according to the present invention with a part of the container exposed, wherein (a) is a front view and (b) is a side view.
Fig. 2 is a plan view from above of the container for cosmetic material illustrated in Fig. 1.
Fig. 3 is a diagram for explaining a manner in which the container for cosmetic material illustrated in Fig. 1 is manufactured from the parison by blow molding, wherein (a) illustrates a state in which the parison is to be mounted to mold for blow molding with a part of the parison exposed, and (b) illustrates a state in which the parison has been mounted to the molds of the blow molding with a part of the parison exposed.
Fig. 4 is a front view illustrating a preferable embodiment of the parison according to the present invention with a part of the parison exposed, and a chain double-dashed lines illustrate an external form of the container for cosmetic material.
Fig. 5 is a side view of the parison illustrated in Fig. 4 with a part thereof exposed, and chain double-dashed lines illustrate an external form of the container for cosmetic material.
Fig. 6 is a cross sectioned views of various parts of the parison illustrated in Fig. 4, wherein (a) is an A-A cross sectional view taken in Fig. 4, (b) is a B-B cross sectional view, (c) is a C-C cross sectional view, and (d) is a D-D cross sectional view.

### [Description of Embodiments]

Hereinafter, a parison and a blow molding method according to a preferable embodiment of the present invention will be described in detail with reference to the attached drawings.

In an embodiment of the present invention, a description will be made with reference to an example of a plastic container which has a length in an axial direction longer than a length in a radial direction in a state where an inlet/outlet port of the container for cosmetic material is positioned upward and which is self-sustainable in a upright position by itself.

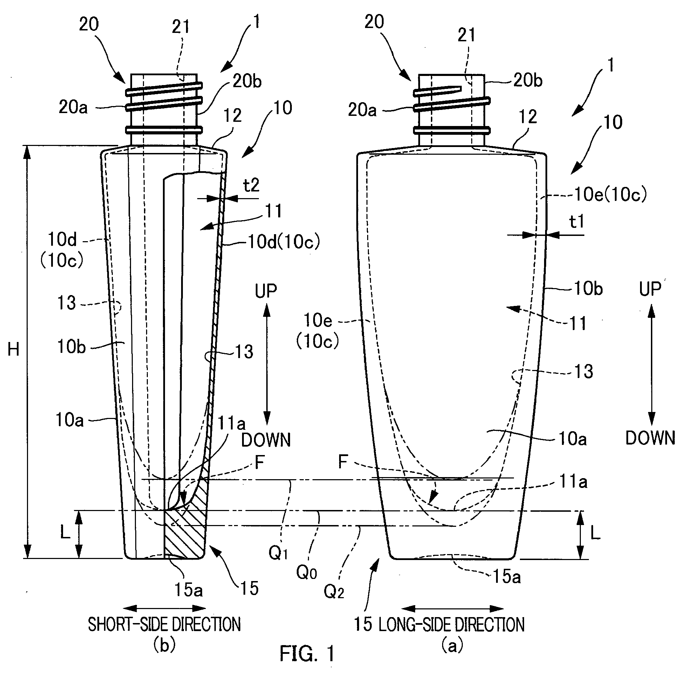

The container 1 according to an embodiment of the present invention, as illustrated in Fig. 1, has a storing portion 10 consisting of a body section 11, a shoulder section 12 and a bottom section 15, and a neck portion integrally formed with the storing portion 10. The neck portion has an inlet/outlet port 21 for a cosmetic material or the like. An upper end of the body section 11 constituting the storing portion 10 is integrally connected to the neck portion by way of the shoulder section 12 which is slightly inclined upward. The neck portion 20 is the portion having a cylindrical shape provided in the center of the shoulder section 12 and is provided with a male thread 20a at the periphery 20b thereof so as to be screwed with a cap (not shown) of the container.

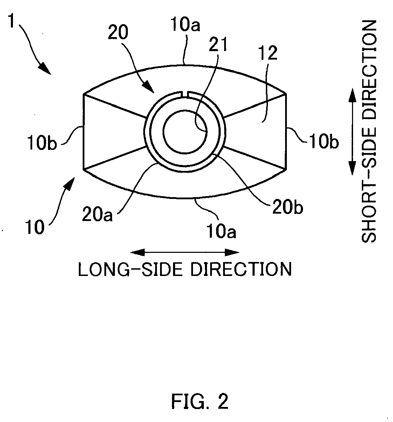

An external shape of the storing portion 10 is formed in such a manner as to become narrow from the shoulder section to bottom section 15. As shown in Fig. 2, when the external shape of the storing portion 10 is viewed from above, parts corresponding to long sides of a substantial rectangle are curved outward and the corners thereof are connected with curved lines. That is to say, the external shape of the storing portion 10 when viewed from above is formed in such a shape that opposing short sides are substantially linear and the long sides connect the ends of the two short sides with curved lines expanding outward. In the following description, surfaces on the long sides of the body portion 10 are referred to as front surfaces 10a, and surfaces on the short side thereof are referred to as side surfaces 10b.

An external shape of each of the front surfaces 10a of the storing portion 10 is formed, as illustrated in Fig. 1(a), to have a narrow width from the upper end toward the lower end with a slightly outwardly curved line toward the lower end, and an external shape of each of the side - surfaces 10b is formed, as illustrated in Fig. 1(b), to have a narrow width in a substantially linear manner from the upper end toward the lower end.

A side surface of the hollow body section 11 of the storing portion 10 is formed, as illustrated in Fig. 1(a), to have a relatively narrow thickness t1 at an upper portion thereof and a gradually increased thickness toward the lower portion thereof. The front surface of the body portion 11 is formed, as illustrated in Fig. 1(b), to have substantially same thin wall thickness t2 from the upper end to the vicinity of the bottom section 15.

A wall thickness L of the bottom section 15, which is from an inner bottom 11a of the hollow body portion 11 to an outer bottom 15a of the bottom section 15, is formed sufficiently thicker than the wall thicknesses t1 and t2 of the body section. For example, a distance L from the inner bottom 11a to the outer bottom 15a of the bottom section 15 is equal to or greater than 5% of the total length H of the storing portion 10, and is further formed so as to be equal to or greater than five times the wall thickness that is a smaller one of the thicknesses t1 and t2 of the peripheral side wall of the body section. The wall thickness t1 and the wall thickness t2 of the peripheral side wall 10c are set, for example, in a range of 0.3 to 1 mm. Further, the bottom section 15 has a curved concave surface slightly recessed upward in the center part of an undersurface of the outer bottom 15a.

The wall thickness t2 of the long side surface of the body portion 11 is formed smaller than the wall thickness t1 of the short side surface thereof so as to have an excellent squeezing property, which facilitates squeezing out of the contained cosmetic material or the like by easily and elastically deforming the front portion 10d of the body section when pressed by fingers.

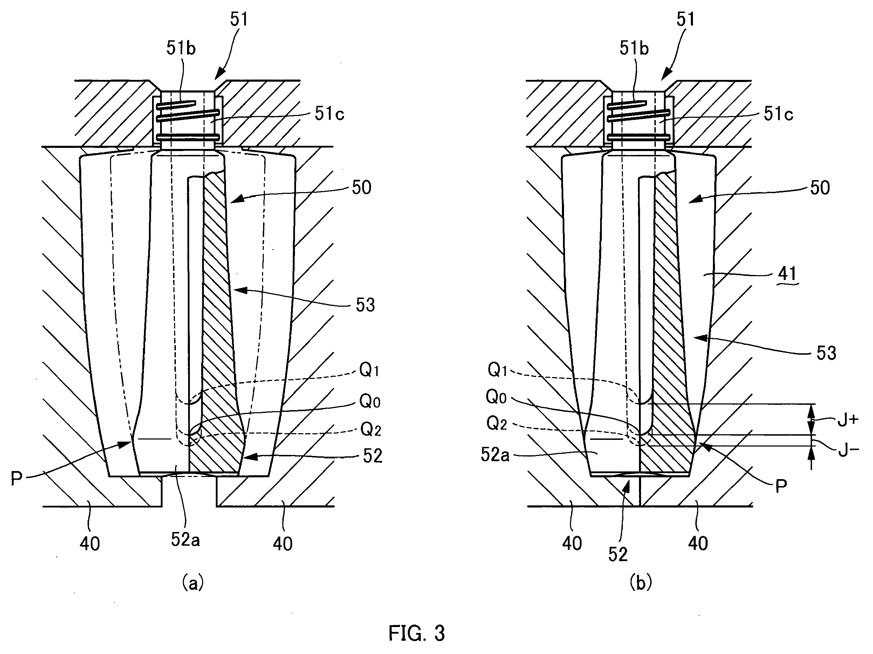

The cosmetic container 1 structured as described above is to be formed by blow molding using a parison shown in Figs. 3 to 6.

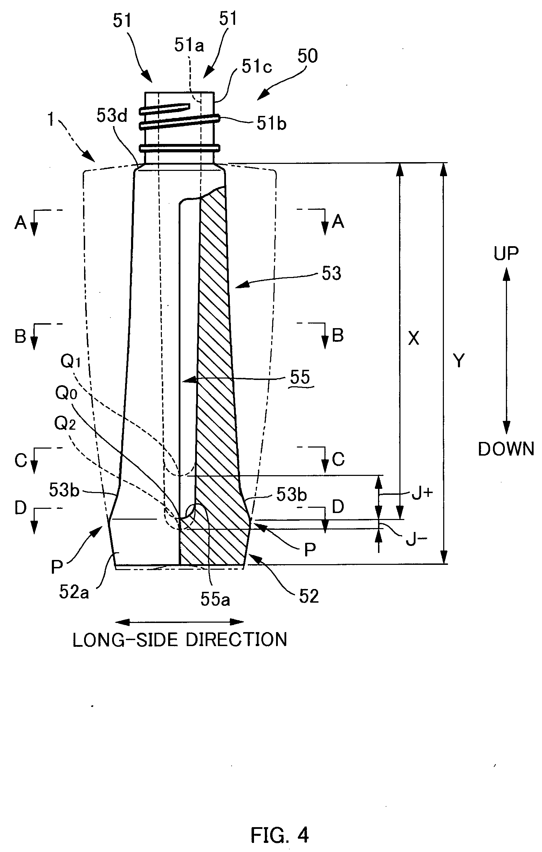

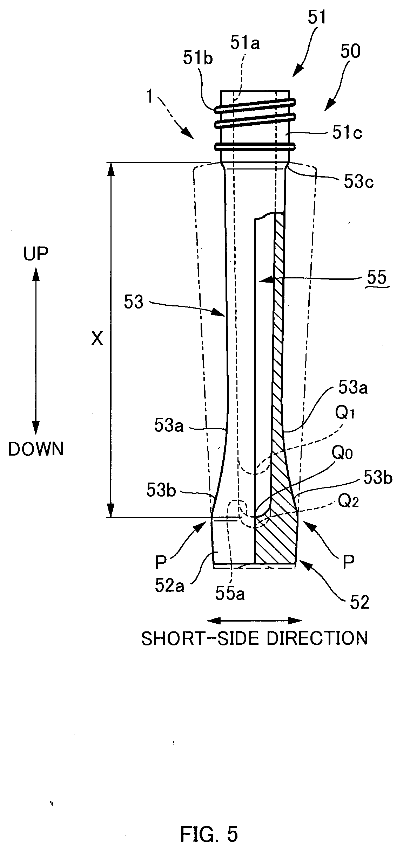

The parison 50 according to an embodiment of the present invention, as shown in Figs. 4 and 5, comprises a neck forming portion 51, a bottom forming portion 52 and, in-between the above both portions 51 and 52, a body forming portion 53 and a shoulder forming portion. An external shape of the neck forming portion 51 is cylindrical shape that matches an external shape of the neck portion of the container to be molded, and a male thread 51b is provided on the periphery thereof. Further, an external shape of the bottom forming portion 52 also matches an external shape of the bottom portion of the container to be molded. The length from the neck forming portion 51 to the bottom forming portion 52 of the parison 50 is formed slightly shorter than the length from the neck section 20 to the bottom section 15 of the container to be molded.

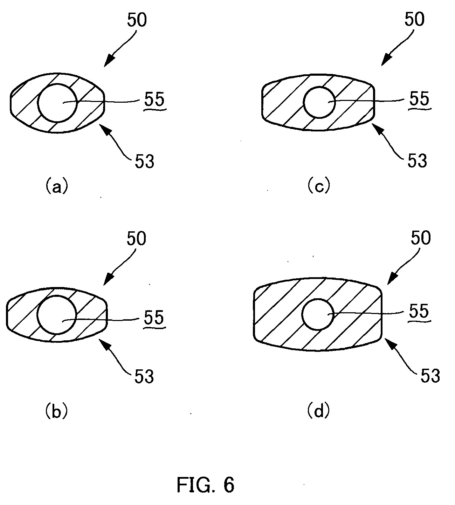

The shoulder forming portion at the upper end of the body forming portion 53 has a width in a long-side direction slightly greater than an external diameter of the cylindrical neck forming portion 51 (Fig. 4), while a width in a short-side direction of the shoulder forming portion is formed slightly smaller than the external diameter of the neck forming portion 51 (Fig. 5). Thus, the external shape at the upper portion of the body forming portion 53 is substantially elliptical shape in a horizontal sectional view as shown in Fig. 6(a).

Further, the vertical sectional shape taken at the center along the long-side direction of the body forming portion 53 is symmetrical as illustrated in Fig. 4 in which the body forming portion 53 is formed along a gently curved surface so that the external diameter in the horizontal direction thereof increases from the neck forming portion 51 toward the bottom forming portion 52. Further, the vertical sectional shape taken at the center along the short-side direction of the body forming portion 53 is also symmetrical as illustrated in Fig. 5, in which the body forming portion 53 is formed along a gently curved surface so that the width in the horizontal direction thereof decreases gradually from the neck forming portion 51 toward the bottom forming portion 52 and that the width becomes smallest at a position 53a where is about 1/4 of the total length X of the body forming portion 53 plus the shoulder forming portion from the bottom.

The bottom forming portion 52 is formed in an inverted trapezoidal shape in vertical cross-section, and a boundary between the bottom forming portion 52 and the body forming portion 53 is designated as P. As shown in the vertical sectional views of the body forming portion 53 of the parison taken along the long-side direction and the short-side direction thereof, there is provided an inclination 53b of which width in the horizontal direction of the body forming portion increases toward the boundary P in a region of about 1/10 from the bottom of the total length X of the body forming portion 53 plus the shoulder forming portion. An angle of the inclination 53b formed relative to a horizontal plane passing through the boundary P is set at an acute angle at least greater than 20°. This gradient of the inclination 53b means that the amount of change in a direction toward the bottom forming portion 52 (axial direction in the figures) is greater than the amount of change in the width direction (radial direction in the figures). Further, a curved surface, for example, roundness (angle R) equal to or greater than 0.4 mm is provided at the boundary P between the inclination 53b and the bottom forming portion 52.

Further, at the shoulder forming portion, which is a boundary portion between the body forming portion 53 and the neck forming portion 51 and will become the shoulder section 12 after blow molding, a taper 53d, which becomes wider toward the lower side, is formed on the front surface side 10a as illustrated in Fig. 4, and a taper 53c, which becomes narrower toward the lower side, is formed on the side surface side 10b as illustrated in Fig. 5, at substantially the same height as that of the shoulder section 12.

Formed along the center of the body forming portion 53 of the parison 50 is a space 55 into which air is blown when blow molding is carried out. The space has a narrow cylindrical concave portion which has an upper end connected to an inlet/outlet port 51a of the neck forming portion 51. The cylindrical concave portion has an interior diameter that gradually decreases toward the bottom forming portion 52, as illustrated in Figs. 6(a) to 6(d). An inner bottom 55a of the concave portion is positioned above the boundary portion P of the bottom forming portion 52 and is formed at such a position that an interval between the inner bottom 55a and the boundary portion P is equal to or smaller than 3.5 mm.

The bottom forming portion 52 of the parison 50, in an inverted trapezoidal shape in cross-section, is formed in substantially the same external shape as that of the bottom section 15 of the cosmetic container 1 to be molded. The parison is formed with a length Y, which is from the upper end of the shoulder forming portion to the lower end of the bottom forming portion 52 of the parison. The above length Y of the parison is made smaller, for example, by about 0.3 to 1 mm, than the total length H of the storing portion 10 of the molded container (H>Y) so that when parison is set into the molds, the outer bottom part of the parison cannot contact with molds for blowing the container so as not to transfer the heat of the parison to the molds before molding. Similarly, a slight space is formed also between the molds and the outer peripheral surface of the bottom forming portion 52 of the parison.

The parison according to the aforementioned structure is molded, by a well-known method, using injection mold having inner molding space that matches an external form of the aforementioned parison. The parison ejected from the injection mold is reheated except for the neck forming portion 51 and, as illustrated in Fig. 3, inserted into the molds for the blow molding with the neck forming portion being clamped by molds 60 (Fig. 3(a)) while other parts 40 and 40 of the blow molding mold are separated in the horizontal direction from the shoulder forming portion, the body forming portion 53 and the bottom forming portion 52 of the parison located below the neck forming portion. Then the mold 40 and 40 is closed (Fig. 3(b)) in which the inner surfaces of the closed mold define the shoulder portion 12, the body portion 11 and the bottom portion 15 of the container to be molded. Although the outer peripheries of the shoulder forming portion and the body forming portion 53 of the parison are widely separated from the inner surfaces of the mold 40 and 40, the outer bottom surface of the bottom forming portion 52 of the parison is at a position separated about 0.3 to 1 mm from the inner bottom surface of the molds 40 and 40, and further the outer periphery of the bottom forming portion 52 of the parison is, similarly to the aforementioned case, at a position slightly separated from the inner lower peripheries of the molds 40 and 40.

In the above state, when compressed air is blown under pressure from the neck portion into the space 55 in the body forming portion of the parison, the body forming portion 53 of the parison is stretched first in the axial direction, and then the bottom forming portion 52 is moved toward the inner bottom surface of the mold 40 and 40. Therefore, the outer bottom surface of the parison comes into contact with the inner bottom surface of the mold 40 and 40 and the outer periphery thereof comes into contact with the inner peripheries at the bottom side of the mold, thereby restricting the further movement of the bottom portion of the parison. Thereafter, the body forming portion 53 is stretched in the lateral direction, and the shoulder portion and the body portion are greatly stretched to come into contact with the inner surface of the mold 40 and 40. At this time, the inner wall of the body forming portion 53, as illustrated in Fig. 1(a), is molded to have a wall thickness gradually increasing from the upper end toward the bottom portion in such a manner to draw a curved line. The inner bottom surface of the body portion is molded to have an inner surface line 13 such as an arc-shaped line 13. The side surface of the body forming portion 53 is formed to have a substantially uniform wall thickness in cross section which is smaller than that of the front surface thereof, as illustrated in Fig. 1(b).

The aforementioned inner surface line 13 depends on the shape of the parison. For example, in the case where an angle (acute angle) of the inclination 53b, which is connected to the boundary P of the body forming portion 53 of the parison, is formed small relative to the horizontal plane, the inner surface line 13 is formed to have a large width at the bottom side, whereas an angle (acute angle) of the inclination surface 53b is formed large, the inner surface line 13 is formed to have a small width at the bottom side.

In the present invention, it is preferable to regulates that the lowest end Q₀, Q₁ in the inner bottom area F of the container to be molded is to have a dimension (J+) equal to or smaller than 3.5 mm above the boundary portion P between the body forming portion 53 and the bottom forming portion 52. By such regulation, at the time of blow molding, the bottom forming portion 52 which has a large wall thickness cannot be stretched in the vertical direction (axial direction) and the lateral direction (radial direction) by the internal pressure of the blow molding, whereby the external shape of the bottom section 15 of the molded container can exactly match the external shape of the bottom forming portion 52 of the parison.

Note that the lowest end Q₂ in the inner bottom area F of the container to be formed can be set to a position lower than the boundary portion P by regulating the dimension (J-) from the boundary portion P between the body forming portion 53 and the bottom forming portion 52. The dimension (J-) in this case is defined by the relationship with the wall thickness of the bottom forming portion and, preferably, set to be smaller than or equal to 1/10 of the wall thickness of the bottom forming portion. Thus, the outer bottom surface and the side periphery of the bottom forming portion 52 of the parison get into contact with the inner bottom surface and the bottom inner periphery of the mold 40 and 40, respectively, at an early stage of blow molding of the parison, whereby the movements of the bottom forming portion is restricted and the external shape thereof is defined. Therefore, the external shape of the bottom forming portion 52 of the parison is not affected.

According to the parison 50 of the present embodiment, the external shapes of the neck forming portion 51, which will become the inlet/outlet port 21 for a cosmetic material, and the bottom forming portion 52 are formed to have substantially the same dimensions, respectively, as those of the neck section 20 and the bottom section 15 of the blow molded container. Therefore, the neck forming portion 51 and the bottom forming portion 52 are restricted to stretch in the outer circumferential direction when blow molding is carried out by bringing the peripheral side surfaces 51c and 52a thereof into contact with the mold 40 and 40, whereby the shapes of the neck forming portion 51 and the bottom forming portion 52 are maintained as they are after blow molding, and as the body forming portion 53 is stretched, the container 1 can be made in which the wall thicknesses of the front wall 10d and the side wall 10e of the body section have smaller than the thickness of the bottom section 15.

Further, since the bottom forming portion 52 of the parison 50 is set in the mold in such a manner that the outer bottom surface and the side peripheral surface thereof are to be slightly separated from the inner bottom surface and inner bottom side surface of the mold 40 adn 40 for blow molding, respectively, heat of the parison is not transferred to the mold 40 and 40. Thus, the molded container having a good external appearance, which is suitable for a cosmetic container or the like, can be formed accurately.

Further, since the passion has the following external shapes such that the body forming portion 53 of the parison is formed with the gradually curved surface 53b having a width increasing toward the bottom forming portion 52, that smooth connection is provided at the boundary portion P between the bottom forming portion 52 not stretched in the outer circumferential direction after blow molding and the body forming portion 53 stretched after blow molding; and that the curved surface 53b is formed to have such gradient that the amount of change in a longitudinal direction is greater than the amount of change in a width direction, the effects can be attained such that a curvature of the contour at the boundary portion P between the body forming portion 53 and the bottom forming portion 52 becomes small and that a depression is hardly created at the boundary portion P between the bottom forming portion 52 not stretched in the outer circumferential direction after blow molding and the body forming portion 53 stretched after blow molding, thereby making possible to smoothly connect the boundary portion P by gently curved surface without projections and depressions.

Further, since the front outer peripheral portion 10d of the body section 11 is formed into a thin wall as stretched by blow molding, the body section becomes easy to deform elastically. Thus, a cosmetic material or the like contained in the body section 11 can easily be squeezed out, thereby making it possible to provide the cosmetic container 1 having an excellent squeezable property.

Further, since the bottom section 15 of the container 1 has a wall thickness sufficiently greater than that of the front outer periphery portion 10d and the side outer periphery portion 10e of the body section 11, the container is able to keep a stable standing state by itself.

Further, according to the present invention, as a material for blow molding, polyethylene terephthalate, polypropylene, polyethylene, and/or the like can be used. Furthermore, these materials are not limited to a single layer, but can be used as multi-layers. Whereas, when commonly known crystalline material is used, cooling installations having high cooling efficiency will be required to rapidly cool the material in the molds to suppress clouding and the like, which are caused by crystallization of the material when being cooled. In the case where transparency and appearance are to be emphasized, an amorphous material is recommended to use, as the clouding will not occur, and thus it becomes possible to stably manufacture the above described blow molded containers without the need for particular installations for not causing such clouding.

Further, in the above described embodiment of the present invention, the bottom forming portion of the parison is in the inverted trapezoidal shape in cross-section, but it is not limited thereto, and as far as the diameter of the lower portion is not larger than that of the upper portion, it may be in a cylindrical shape.

### [Reference Signs List]

1 cosmetic container, 11 storage portion, 15 bottom section, 50 parison, 51 neck forming portion, 51a inlet/outlet port, 52 bottom forming portion, 52a peripheral side surface of bottom forming portion, 53 body forming portion, 55 space in body portion, J+, J- dimension from boundary portion between body forming portion and bottom forming portion to inner bottom surface in body portion, P boundary portion between body forming portion and bottom forming portion, Q inner bottom lower end of space in body portion, t1 wall thickness of outer peripheral side portion, t2 wall thickness of peripheral front portion

## Claims

1. A blow molding parison for a container comprising:
a neck forming portion (51), a shoulder forming portion , a body forming portion (53) and a bottom forming portion (52),
**characterized in that** the bottom forming portion (52) has a sidewall and a bottom wall with the wall thicknesses of both of the sidewall and bottom wall being greater than a wall thickness of a body section (11) of the container (1) to be molded, and that an external shape of the bottom forming portion (52) of the parison (50) is same as an external shape of a bottom section (15) of the container (1) to be molded.

2. The blow molding parison according to claim 1, **characterized in that** a hollow portion (55) in which a compressed air is blown is formed along a central axis of the body forming portion (53) of the parison (50) in a narrow cylindrical concave shape with a bottom surface (55a) of the concave terminating at a position within 3.5 mm above a boundary (P) between the body forming portion (53) and the bottom forming portion (52) of the parison.

3. The blow molding parison according to claim 1 or 2, **characterized in that** a lower portion of the body forming portion (53) of the parison (50) has a curved surface whose width and thickness gradually increase toward the bottom forming portion (52) and the curved surface has a gradient such that an amount of change in a axial direction is greater than an amount of change in a width direction.

4. A method for blow molding a container comprising the steps of:
forming a parison (50) comprising a neck forming portion (51), a shoulder forming portion, a body forming portion (53) and a bottom forming portion (52), wherein the bottom forming portion has a sidewall and a bottom wall and wall thicknesses of both of the sidewall and bottom wall are greater than a wall thickness of a body section (11) of the container (1) to be molded;
preparing blow molding mold (40) which has such internal shape that is greater than external shapes of the shoulder forming portion and the body forming portion (53) and is substantially same as an external shape of the bottom forming portion (51);
inserting the parison (50) into the mold with the neck forming portion (51) being held with such spaces that an outer sidewall and an outer bottom surface of the bottom forming portion of the parison are separated with a minute distance from a bottom inner periphery and a bottom inner surface of the mold, respectively;
and blowing compressed air into the parison, thereby stretching the body forming portion (53) of the parison in an axial direction and moving the bottom forming portion (52) of the parison toward the bottom inner surface of the mold, causing the outer bottom surface of the bottom forming portion to abut on the inner bottom surface of the mold and causing an outer periphery of the bottom forming portion to abut on the bottom inner periphery of the mold, and restricting the movement of the bottom portion by such abutments, and thereafter, stretching the body forming portion in a lateral direction, and bringing the shoulder forming portion and the body forming portion into contact with inner surface of the mold,
whereby the external shape of the bottom forming portion (52) of the parison (50) becomes same as an external shape of a bottom section (15) of the container (1).

5. The method for blow molding a container according to claim 4, wherein the parison (50) to be used in the blow molding is formed such that the bottom surface (55a) of the hollow concave portion thereof terminates at a position within 3.5 mm above the boundary (P) between the body forming portion (53) and the bottom forming portion (52).

6. The method for blow molding a container according to claim 4 or 5, wherein the parison is formed such that a lower portion of the body forming portion (53) thereof has a curved surface whose width and wall thickness gradually increase toward the bottom forming portion (52) and the curved surface has a gradient such that an amount of change in an axial direction is greater than an amount of change in a width direction.

7. The method for blow molding a container according any one of claims 4 to 6, wherein the minute distance is set in a range of 0.3 to 1.0 mm.

8. The blow molding method according to any one of claims 4 to 7, wherein an angle (acute angle) formed between an inclination of the body forming portion, which is adjacent to a boundary (P) between the body forming portion (53) and bottom forming portion (52), and a horizontal plane is varied in order to change an internal shape of the body section (11) of the container (1).

## Patentansprüche

1. Blasformenrohling für einen Behälter, umfassend:
einen halsbildenden Abschnitt (51), einen anschlagbildenden Abschnitt, einen körperbildenden Abschnitt (53) und einen bodenbildenden Abschnitt (52),
**dadurch gekennzeichnet, dass** der bodenbildende Abschnitt (52) eine Seitenwand und eine Bodenwand aufweist, wobei die Wanddicken sowohl der Seitenwand als auch der Bodenwand größer als eine Wanddicke eines Körperbereichs (11) des zu gießenden Behälters (1) ist, und dass eine äußere Form des bodenbildenden Abschnitts (52) des Rohlings (50) gleich einer äußeren Form eines Bodenbereichs (15) des zu gießenden Behälters (1) ist.

2. Blasformenrohling nach Anspruch 1, **dadurch gekennzeichnet, dass** ein hohler Abschnitt (55), in welchen komprimierte Luft geblasen wird, entlang einer zentralen Achse des körperbildenden Abschnitts (53) des Rohlings (50) in eine enge zylindrische konkave Form geformt ist, wobei eine Bodenoberfläche (55a) der konkaven Form bei einer Position innerhalb von 3,5 mm über einer Grenze (P) zwischen dem körperbildenden Abschnitt (53) und dem bodenbildenden Abschnitt (52) des Rohlings endet.

3. Blasformenrohling nach Anspruch 1 oder 2, **dadurch gekennzeichnet, dass** ein unterer Abschnitt des körperbildenden Abschnitts (53) des Rohlings (50) eine gekrümmte Oberfläche aufweist, dessen Breite und Dicke sich schrittweise zu dem bodenbildenden Abschnitt (52) erhöhen und die gekrümmte Oberfläche eine derartige Steigung aufweist, dass ein Anteil einer Änderung in eine Axialrichtung größer als ein Anteil einer Änderung in eine Breitenrichtung ist.

4. Verfahren zum Blasformen eines Behälters, umfassend die Schritte:
Formen eines Rohlings (50) umfassend einen halsbildenden Abschnitt (51), einen anschlagbildenden Abschnitt, einen körperbildenden Abschnitt (53) und einen bodenbildenden Abschnitt (52), wobei der bodenbildende Abschnitt eine Seitenwand und eine Bodenwand aufweist und Wanddicken sowohl der Seitenwand als auch der Bodenwand größer als eine Wanddicke eines Körperbereichs (11) des zu gießenden Behälters (1) sind;
Vorbereiten einer Blasformengussform (40), die eine solche innere Form aufweist, die größer als äußere Formen des anschlagbildenden Abschnitts und des körperbildenden Abschnitts (53) ist und im Wesentlichen gleich einer äußeren Form des bodenbildenden Abschnitts (51) ist;
Einführen des Rohlings (50) in die Gussform, wobei der anschlagbildende Abschnitt (51) mit solchen Abständen gehalten wird, dass eine äußere Seitenwand und eine äußere Bodenoberfläche des bodenbildenden Abschnitts des Rohlings mit einem geringen Abstand entsprechend von einem bodeninneren Randbereich und einer Bodeninnenoberfläche der Gussform getrennt sind;
und Blasen komprimierter Luft in den Rohling, um dadurch den bodenbildenden Abschnitt (53) des Rohlings in eine Axialrichtung auszudehnen und den bodenbildenden Abschnitt (52) des Rohlings hin zu der Bodeninnenoberfläche der Gussform zu bewegen, Veranlassen der äußeren Bodenoberfläche des bodenbildenden Abschnitts an dem bodeninneren Randbereich der Gussform anzuliegen und Veranlassen eines äußeren Randbereichs des bodenbildenden Abschnitts an dem bodeninneren Randbereich anzuliegen, und Einschränken der Bewegung des Bodenbereichs durch solche Anschläge, und danach Ausdehnen des körperbildenden Abschnitts in eine laterale Richtung, und in Kontakt Bringen des anschlagbildenden Abschnitts und des körperbildenden Abschnitts mit einer Innenoberfläche der Gussform,
wobei die äußere Form des bodenbildenden Abschnitts (52) des Rohlings (50) gleich einer äußeren Form eines Bodenbereichs (15) des Behälters (1) wird.

5. Verfahren zum Blasformen eines Behälters nach Anspruch 4, bei dem der bei dem Blasformen zu verwendende Rohling (50) so geformt wird, dass die Bodenoberfläche (55a) des hohlen konkaven Abschnitts davon bei einer Position innerhalb von 3,5 mm über der Grenze (P) zwischen dem körperbildenden Abschnitt (53) und dem bodenbildenden Abschnitt (52) endet.

6. Verfahren zum Blasformen eines Behälters nach Anspruch 4 oder 5, bei dem der Rohling so geformt wird, dass ein unterer Abschnitt des körperbildenden Abschnitts (53) davon eine gekrümmte Oberfläche aufweist, dessen Breite und Wanddicke sich schrittweise hin zu dem bodenbildenden Abschnitt (52) erhöht und die gekrümmte Oberfläche eine derartige Steigung aufweist, dass ein Anteil einer Änderung in eine Axialrichtung größer als ein Anteil einer Änderung in eine Breitenrichtung ist.

7. Verfahren zum Blasformen eines Behälters nach einem der Ansprüche 4 bis 6, bei dem der geringe Abstand in einem Bereich von 0,3 bis 1,0 mm liegt.

8. Blasformenverfahren nach einem der Ansprüche 4 bis 7, bei dem ein Winkel (spitzer Winkel) zwischen einer Neigung des körperbildenden Abschnitts geformt ist, welcher an einer Grenze (P) zwischen dem körperbildenden Abschnitt (53) und dem bodenbildenden Abschnitt (52) angrenzt, und eine horizontale Ebene variiert wird, um eine innere Form des Körperbereichs (11) des Behälters (1) zu ändern.

## Revendications

1. Paraison de moulage par soufflage pour récipient, comprenant :
une partie de formation de goulot (51), une partie de formation d'épaulement, une partie de formation de corps (53) et une partie de formation de fond (52),
**caractérisée en ce que** la partie de formation de fond (52) comporte une paroi latérale et une paroi de fond, les épaisseurs de paroi de la paroi latérale et de la paroi de fond étant supérieures à une épaisseur de paroi d'une section corps (11) du récipient (1) à mouler, et **en ce qu'**une forme externe de la partie de formation de fond (52) de la paraison (50) est identique à une forme externe d'une section fond (15) du récipient (1) à mouler.

2. Paraison de moulage par soufflage selon la revendication 1, **caractérisée en ce qu'**une partie creuse (55), dans laquelle est soufflé un air comprimé, est formée le long d'un axe central de la partie de formation de corps (53) de la paraison (50) en une forme concave cylindrique étroite, une surface inférieure (55a) de la portion concave se terminant en une position dans les limites de 3,5 mm au-dessus d'une frontière (P) entre la partie de formation de corps (53) et la partie de formation de fond (52) de la paraison.

3. Paraison de moulage par soufflage selon la revendication 1 ou 2, **caractérisée en ce qu'**une partie inférieure de la partie de formation de corps (53) de la paraison (50) comporte une surface incurvée dont la largeur et l'épaisseur augmentent progressivement en direction de la partie de formation de fond (52) et la surface incurvée a un gradient tel qu'une quantité de modification dans une direction axiale est supérieure à une quantité de modification dans le sens de la largeur.

4. Procédé de moulage par soufflage d'un récipient, comprenant les étapes consistant à :
former une paraison (50) comprenant une partie de formation de goulot (51), une partie de formation d'épaulement, une partie de formation de corps (53) et une partie de formation de fond (52), la partie de formation de fond comportant une paroi latérale et une paroi de fond, et les épaisseurs de paroi de la paroi latérale et de la paroi de fond étant supérieures à une épaisseur de paroi d'une section corps (11) du récipient (1) à mouler ;
préparer un moule de moulage par soufflage (40) qui présente une forme interne qui est supérieure aux formes externes de la partie de formation d'épaulement et de la partie de formation de corps (53) et est sensiblement identique à une forme externe de la partie de formation de fond (51) ;
insérer la paraison (50) dans le moule, la partie de formation de goulot (51) étant maintenue avec des espaces tels qu'une paroi latérale externe et une surface inférieure externe de la partie de formation de fond de la paraison soient séparées d'une distance minuscule d'une périphérie interne inférieure et d'une surface interne inférieure du moule, respectivement ;
et souffler de l'air comprimé dans la paraison, de façon à étirer la partie de formation de corps (53) de la paraison dans une direction axiale et déplacer la partie de formation de fond (52) de la paraison vers la surface interne inférieure du moule, amener la surface inférieure externe de la partie de formation de fond à buter sur la surface inférieure interne du moule et amener une périphérie externe de la partie de formation de fond à buter sur la périphérie interne inférieure du moule, et restreindre le mouvement de la partie de fond par de telles butées, puis, étirer la partie de formation de corps dans une direction latérale, et amener la partie de formation d'épaulement et la partie de formation de fond en contact avec la surface interne du moule,
grâce à quoi la forme externe de la partie de formation de fond (52) de la paraison (50) devient identique à une forme externe d'une section fond (15) du récipient (1).

5. Procédé de moulage par soufflage d'un récipient selon la revendication 4, dans lequel la paraison (50) devant être utilisée dans le moulage par soufflage est formée de manière que la surface inférieure (55a) de sa partie concave creuse se termine en une position dans les limites de 3,5 mm au-dessus de la frontière (P) entre la partie de formation de corps (53) et la partie de formation de fond (52).

6. Procédé de moulage par soufflage d'un récipient selon la revendication 4 ou 5, dans lequel la paraison est formée de manière qu'une partie inférieure de sa partie de formation de corps (53) comporte une surface incurvée dont la largeur et l'épaisseur augmentent progressivement en direction de la partie de formation de fond (52) et la surface incurvée ait un gradient tel qu'une quantité de modification dans une direction axiale soit supérieure à une quantité de modification dans le sens de la largeur.

7. Procédé de moulage par soufflage d'un récipient selon l'une quelconque des revendications 4 à 6, dans lequel la distance minuscule est fixée dans une plage de 0,3 à 1,0 mm.

8. Procédé de moulage par soufflage selon l'une quelconque des revendications 4 à 7, dans lequel un angle (angle aigu) formé entre une inclinaison de la partie de formation de corps, qui est adjacente à une frontière (P) entre la partie de formation de corps (53) et la partie de formation de fond (52), et un plan horizontal est varié afin de modifier une forme interne de la section corps (11) du récipient (1).
